# EUROPÄISCHE PATENTANMELDUNG

(11) **EP 1 939 705 A1**
(43) Veröffentlichungstag der Anmeldung: **02.07.2008**
(21) Anmeldenummer: 07022459.7
(22) Anmeldetag: 20.11.2007
(51) Int. Cl.: G05D 23/20, B29C 45/78

(54) **Elektrische Regelanordnung für die Heizkörper einer Vielzahl von Düsen und/oder Heisskanal-Verteilerabschnitten einer Spritzgiessanlage**

(30) Priorität: 01.12.2006 DE 102006056722
(71) Anmelder: Incoe International Inc., 63322 Rödermark (DE)
(72) Erfinder: Goinski, Michael Dipl. Ing., 63110 Rodgau (DE); Klein, Hagen, 63310 Rodgau (DE)
(74) Vertreter: Boecker, Joachim

(57) **Zusammenfassung**

Elektrische Regelanordnung für die Heizkörper einer Vielzahl von Düsen und/oder Heißkanal-Verteilerabschnitten einer Spritzgießanlage, wobei die Heizkörper (2a,2b) mehrerer Düsen und/oder Heißkanal-Verteilerabschnitt zu Heizkörpergruppen zusammengefaßt sind und jede Heizkörpergruppe über je einen Heizregler (1),gespeist wird. Gemäß der Erfindung werden/wird alle oder ein Teil der Heizkörper (2a,2b) einer Heizkörpergruppe über je ein individuelles Steuerglied (4,4a) gespeist, welche Steuerglieder ihrerseits von dem zugehörigen Heizregler (1) der Heizkörpergruppe gespeist werden. Das Temperaturmeßglied (6) des zugegörigen Heizreglers (1) ist an einen ausgewählten Heizkörper (2a) beziehungsweise Heißkanal-Verteilerabschnitt der zugegörigen Heizkörpergruppe angeschlossen (Figur 1).

## Beschreibung

Die vorliegende Erfindung bezieht sich auf eine elektrische Regelanordnung für die Heizkörper einer Vielzahl von Düsen und/oder Heißkanal-Verteilerabschnitten einer Spritzgießanlage.

Beim Spritzgießen wird heiße Kunststoffschmelze von der Spritzgießmaschine über Heißkanal-Verteiler und Düsen in die Spritzgießwerkezeuge gespritzt. Dabei ist es wichtig, daß die Schmelze in einem engen Temperaturbereich gehalten wird, der für eine gute Qualität der gespritzten Spritzgußteile erforderlich ist. Aus diesem Grunde sind sowohl die Düsen als auch die Heißkanal-Verteiler(abschnitte) mit elektrischen Heizkörpern ausgerüstet, deren Strom gesteuert wird von einem die Temperatur der Düsen beziehungsweise der Heißkanal-Verteiler(abschnitte) regelnden Reglern. zu diesem Zweck sind an den Düsen beziehungsweise dem Heißkanal-Verteilern/den Heißkanal-Verteilerabschnitten Temperaturmeßglieder vorhanden, welche die Regler mit dem Istwert der Temperatur versorgen.

Beim Spritzgießen kleiner Kunststoffteile ist man bemüht, möglichst viele Teile in einem Spritzzyklus herzustellen. Um dabei das Werkzeug klein zu halten, werden die Kavitäten im Werkzeug möglichst kompakt angeordnet. Grundsätzlich ist es möglich, die Schmelze für mehrere der genannten Teile über eine einzige Düse ins Werkzeug einzuspritzen. Dies hat jedoch den Nachteil, daß dann im Werkzeug sogenannte Kaltkanäle vorgesehen werden müssen, über welche die Schmelze zu den einzelnen Kunststoffteilkavitäten geleitet wird. Durch diese Kaltkanäle erhöht sich einerseits die Zykluszeit, und andererseits kann die Länge der Kanäle zu einer unerwünschten Abkühlung der Schmelze für die vom Düsenanschnitt weit entfernt liegenden Kavitäten führen. Beides ist unerwünscht. Die höhere Zykluszeit ist dadurch bedingt, daß der Querschnitt (zum Beispiel 5 mm) der Kaltkanäle bedeutend größer ist, als die wandstärke (zum Beispiel 1 mm) der herzustellenden kleinen Kunststoffteile, so daß die Erstarrung der Schmelze in den Kaltkanälen länger als in den Kavitäten dauert.

Aus diesem Grunde werden Spritzgießanlagen mit einer großen Anzahl von Düsen verwendet, zum Beispiel 16, 32 oder 64, wobei jede Düse nur eine (oder nur wenige) Kavitäten versorgt. Werden in einer solchen Spritzgießanlage alle Düsen und einzelnen Abschnitte des Heißkanal-Verteilersystems individuell temperatur-geregelt, so entstehen beispielsweise bei einem System mit 64 Düsen circa 80 Regelzonen. Für jede Regelzone sind 4 Leiter erforderlich, und zwar je zwei für das Temperaturmeßglied und für den Heizkörper.

Um den vorgenannten Aufwand zu vermindern, ist es bekannt, die Heizkörper mehrerer Düsen oder Heißkanal-Verteilerabschnitte zusammenzufassen. Beispielsweise werden die Heizkörper mehrerer Düsen in Reihe geschaltet, so daß nur ein Regler und ein Temperaturmeßglied für diese Düsen erforderlich sind. Der Nachteil dieses sogenannten "gang heating" besteht darin, daß es aufgrund von Unterschieden in der Leistung der Heizkörper, der Kontaktintensität zwischen Düsen und Werkzeug und der Kühlung des Werkzeuges zu Temperaturunterschieden der in die einzelnen Kavitäten einströmenden Schmelze kommt. Dies führt zu Unterschieden in der Qualtität der Spritzgußteile, was bisher in Kauf genommen wurde.

Der vorliegenden Erfindung liegt die Aufgabe zugrunde, eine elektrische Regelanordnung für die Heizkörper einer Vielzahl von Düsen und/oder Heißkanal-Verteilerabschnitten einer Spritzgießanlage der eingangs genannten Art zu entwickeln, bei der die vorgenannten Nachteile des "gang heating" vermieden werden.

Zur Lösung dieser Aufgabe wird eine elektrische Regelanordnung gemäß dem Oberbegriff des Anspruches 1 vorgeschlagen, welche erfindungsgemäß die im kennzeichnenden Teil des Anspruches 1 genannten Merkmale hat.

Vorteilhafte Ausgestaltungen und weiterbildungen der Erfindung sind in den Unteransprüchen genannt.

Dadurch, daß gemäß der Erfindung die zu einer Heizkörpergruppe gehörenden Heizkörper, zusätzlich zu der Temperaturregelung nur eines Heizkörpers dieser Heizkörpergruppe, über je ein vorgeschaltetes Steuerglied versorgt werden, kann die jedem Heizkörper zugeführte Leistung zusätzlich individuell verstellt werden.

Bei den zusätzlichen Steuergliedern handelt es sich um strom- oder spannungssteuernde Verstellglieder, wie beispielsweise vorwiderstände oder Spannungsteiler oder aus Halbleitern (z.B. Tyristoren) aufgebaute Steuerglieder (z.B. Triacs).

Anhand der in den Figuren gezeigten Ausführungsbeispiele soll die Erfindung näher erläutert werden. Es zeigen
- Figur 1: eine elektrische Regelanordnung gemäß der Erfindung, die das Prinzip der Erfindung zeigt,
- Figur 2a: in Draufsicht eine elektrische Regelanordnung gemäß der Erfindung für die Heißkanal-Verteilerabschnitte bei einer Spritzgießanlage mit 64 Düsen,
- Figur 2b: einen Schnitt durch die Anordnung gemäß Figur 2a längs der Linie A-A in Figur 2a,
- Figur 3: ein Ausführungsbeispiel einer elektrische Regelanordnung gemäß der Erfindung, wie sie bei einer Anlage mit besonders langen Düsen mit mehreren Heizzonen angewendet werden kann.

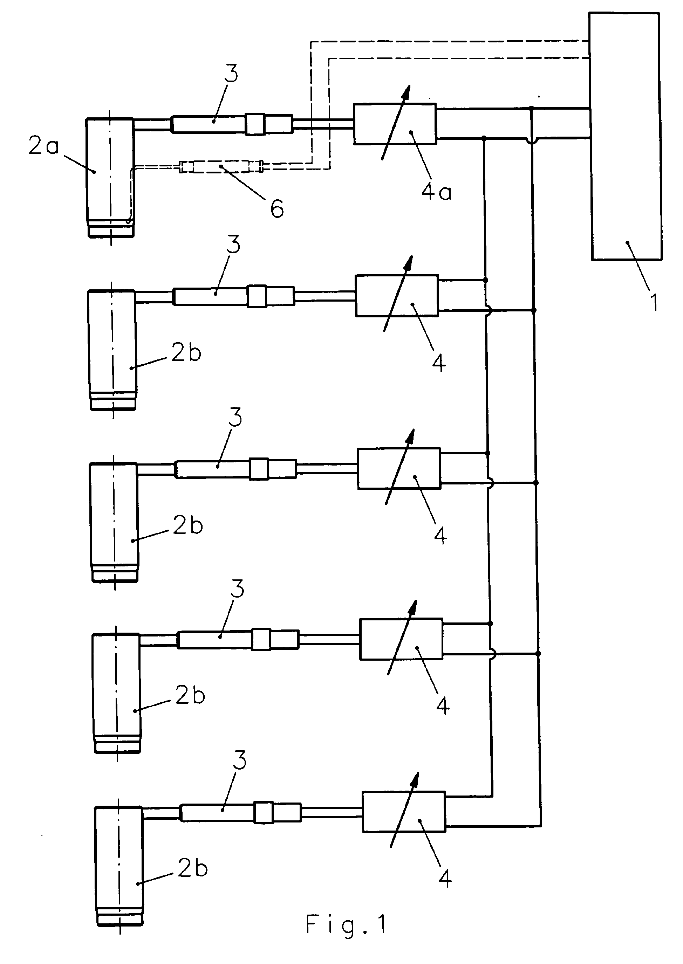

Figur 1 zeigt die Heizkörper (Heizpatrone) 2a,2b von fünf nicht dargestellten Düsen einer Spritzgießanlage, wobei jeder Heizkörper über je eine elektrische Verbindung (Heizungsabgang) 3 und je ein Steuerglied 4,4a an den Ausgang eines gemeinsamen TemperaturReglers 1 (genauer temperaturregelnde Stromquelle) angeschlossen sind. Einer der Heizkörper, der Heizkörper 2a, ist mit einem Temperaturmeßglied (Thermofühler) 6 ausgerüstet, welches die Temperatur des Heizkörpers (und damit der Düse) mißt und den Meßwert als Istwert dem Regler 1 zuführt.

In dem Regler 1 wird eine für die Schmelze erforderliche Sollwerttemperatur vorgegeben, und durch den Regler wird die Temperatur des Heizkörpers 2a auf diesen Sollwert exakt eingeregelt. Die von dem Regler gelieferte Spannung wird auch den übrigen Heizkörpern 2b zugeführt, wobei jedoch die Temperatur der Heizkörper 2b aus den eingangs genannten Gründen von der vorgegebenen Solltemperatur abweichen kann. Dank der Steuerglieder 4 können diese Abweichungen von der vorgegebenen Solltemperatur beseitigt werden.

Die praktische Verwendung der Regelanordnung gemäß der Erfindung kann in der weise erfolgen, daß zunächst mit gleicher Einstellung aller Steuergliedern 4 gearbeitet wird und dann nach einem ersten Zyklus die Qualität der gegossenen Kunststoffteile in Augenschein genommen oder in anderen weise geprüft wird. Dank dieser Prüfung kann die Bedienungsperson dann die Steuerglieder 4 von Hand in der einen oder anderen Richtung verstellen und so durch weitere Beobachtung der Produktqualität bei den darauffolgenden Spritzzyklen zu Einstellungen der Steuerglied 4 gelangen, welche die gewünschte Temperatur an allen Heizkörpern beziehungsweise Düsen gewährleisten.

In Figur 1 ist auch der Heizkreis des Heizkörpers 2a, dessen Temperatur exakt geregelt wird, mit einem zusätzlichen Steuerglied 4a versehen. Dies ist grundsätzlich nicht erforderlich, hat jedoch folgenden Vorteil: Wenn beispielsweise der Heizkörper 2a beziehungsweise die zugehörige Düse ersetzt werden muß und nach Einbau des neuen Bauteils, gleichgültig aus welchem Grunde, eine Änderung der Ausgangsspannung des Reglers 1 eintritt, so müßten auch sämtliche Steuerglieder 4 der übrigen Heizkörper 2b nachjustiert werden. Dank des Steuergliedes 4a kann jedoch die Reglereinstellung unverändert bleiben und die Anpassung der Heizleistung für den neuen Heizkörper beziehungsweise die neue Düse 2a durch das Steuerglied 4a vorgenommen werden.

In bevorzugter Weise werden die Steuerglieder 4,4a auf einen Wert eingestellt, der beispielsweise 75% der maximal durch Verstellung eines Steuergliedes lieferbaren Leistung entspricht. Dadurch ist ein ausreichend großer Stellbereich der Steuerglieder in beiden Richtungen verfügbar.

Wenn auf das Steuerglied 4a des temperatur-geregelten Heizkörpers 2a verzichtet wird, so muß derjenige Heizkörper der Heizkörpergruppe an den Regler angeschlossen werden, der aufgrund der Gegebenheiten die höchste Heizleistung benötigt, um die gewünschte Temperatur zu erreichen. Über die Steuerglieder 4 der übrigen Heizkörper kann dann die vom Regler gelieferte Spannung am zugegörigen Heizkörper reduziert werden.

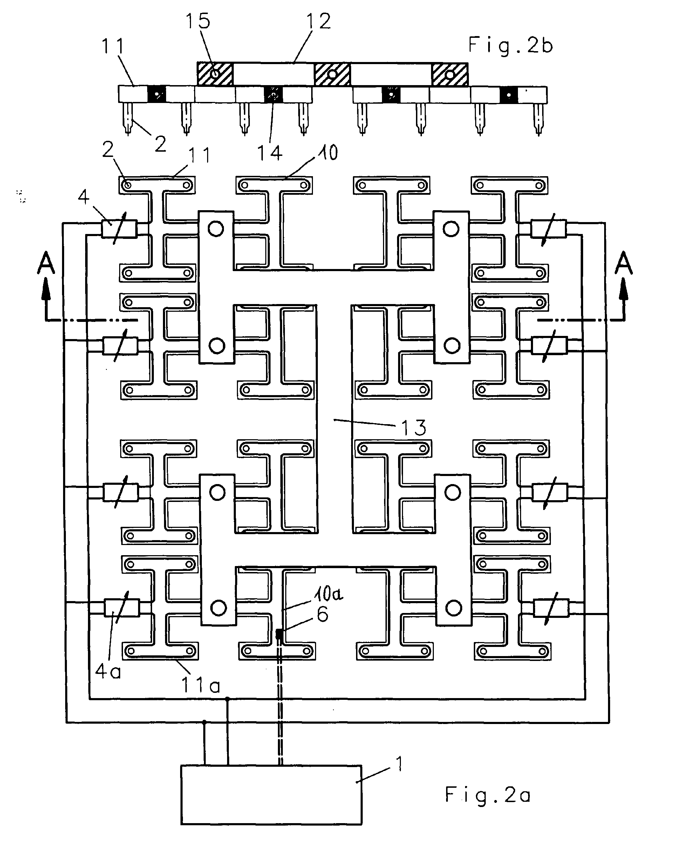

Figur 2 zeigt eine Spritzgießanlage mit 64 Düsen 2, wobei je acht Düsen von je einem als Kompaktverteiler 11 ausgebildeten Heißkanal-Verteilerabschnitt beschickt werden. In der Figur 2 ist nur die elektrische Regelanordnung für die acht Kompaktverteiler dargestellt. Entsprechend dem anhand von Figur 1 erläuterten Prinzip werden auch die Heizkörper der 64 Düsen von Regelanordnungen gespeist, von denen jede die Heizkörper einer Gruppe von Düsen speist.

In Figur 2 wird nur den nur symbolisch dargestellten Heizkörpern 10 der Kompaktverteiler 11 nur der Heizkörper 10a des Kompaktverteilers 11a vom Regler 1 temperatur-geregelt. An diesen Kompaktverteiler ist das Temperaturmeßglied 6 des Reglers 1 angeschlossen. Die Heizkörper 10 der übrigen sieben Kompaktverteiler 11 sind, entsprechend wie in Figur 1, über Steuerglieder 4 an die Ausgangsspannung des Reglers 1 angeschlossen. Auch hier ist aus dem anhand von Figur 1 erläuterten Grunde der temperatur-geregelte Heizkörper 10a des Kompaktverteiler 11a ebenfalls über ein nicht zwingend notwendiges Steuerglied 4a an den Regler 1 angeschlossen.

Figur 2b zeigt einen Schnitt längs der Linie A-A durch die Spritzgießanlage gemäß Figur 2a. Die Kompaktverteiler 11,11a werden von einem übergeordneten Heißkanal-Verteiler 12 versorgt, an den bei 13 sich die Angußbuchse für die Spritzgießmaschine anschließt. Mit 14 und 15 sind die Fließkanäle in den Kompaktverteilern beziehungsweise dem übergeordneten Heißkanal-Verteiler bezeichnet.

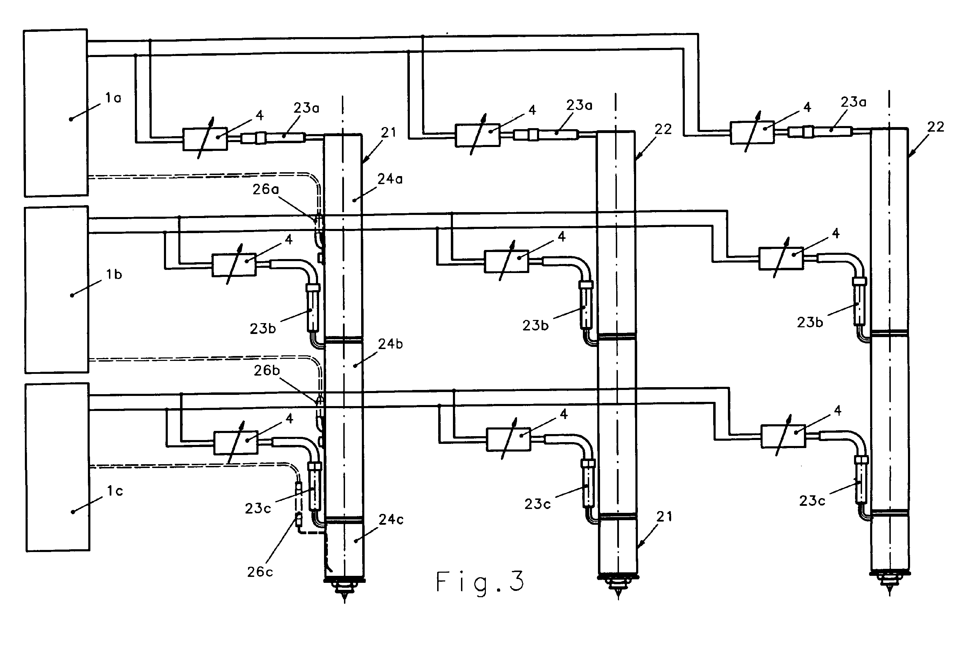

Figur 3 zeigt einen Ausschnitt aus einer Spritzgießanlage, bei der besonders lange Düsen 21,22 (zum Beispiel 500 mm) zum Einsatz kommen. Jede Düse hat dabei drei Heizzonen 24a bis 24c mit zugehörigen, nicht gesondert bezeichneten Heizkörpern. 23a bis 23c bezeichnen wieder die Heizaggänge der Heizkörper.

In diesem Falle werden gemäß der Erfindung die drei Heizkörper der drei Heizzonen 24a bis 24c der Düse 21 über je einen Regler 1a bis 1c temperatur-geregelt, wobei die Heizkörper der Heizzonen mit den erforderlichen Temperaturmeßgliedern 26a bis 26c versehen sind. Die Heizkörper der entsprechenden Heizzonen 24a bis 24c der mehreren Düsen 21,22 werden in diesem Falle jeweils zu Heizkörpergruppen im Sinne der Erfindung an die Ausgangsspannung des entsprechenden Heizzonenreglers 1a bis 1c angeschlossen. Es wird also wieder in jeder Heizkörpergruppe ein Heizkörper temperatur-geregelt, während die anderen Heizkörper der Heizkörpergruppe über je ein Steuerglied 4 an den zugehörigen Regler angeschlossen sind. Im gezeigten Ausführungsbeispiel gehören die drei geregelten Heizzone 24a bis 24c zu derselben Düse 21, was jedoch nicht zwingend ist. Auch hier liegt im geregelten Heizzonekreis ein nicht zwingend erforderliches Steuerglied 4.

## Patentansprüche

1. Elektrische Regelanordnung für die Heizkörper (2a,2b) einer Vielzahl von Düsen und/oder Heißkanal-Verteilerabschnitten einer Spritzgießanlage, wobei die Heizkörper (2a,2b) mehrerer Düsen und/oder Heißkanal-Verteilerabschnitt (11,11a) zu Heizkörpergruppen zusammengefaßt sind und jede Heizkörpergruppe über je einen Heizregler (1),gespeist wird, **dadurch gekennzeichnet, daß** alle oder ein Teil der Heizkörper (2a,2b) einer Heizkörpergruppe über je ein individuelles Steuerglied (4,4a) gespeist werden/wird, welche Steuerglieder ihrerseits von dem zugegörigen Heizregler (1) der Heizkörpergruppe gespeist werden, und daß das Temperaturmeßglied (6) des zugehörigen Heizreglers (1) an einen ausgewählten Heizkörper beziehungsweise Heißkanal-Verteilerabschnitt (2a,11a) der zugegörigen Heizkörpergruppe angeschlossen ist.

2. Elektrische Regelanordnung nach Anspruch 1, **da- durch gekennzeichnet**, daß bei langen Düsen (21,22), die über ihre Länge mehr als eine Heizzone (24a-24c) aufweisen, von denen jede mit einem Heizkörper ausgerüstet ist, die Heizkörper entsprechender Zonen mehrerer Düsen (21,22) zu Heizkörpergruppen gemäß Anspruch 1 zusammengefaßt sind.

3. Elektrische Regelanordnung nach Anspruch 1 oder 2, **da-durch gekennzeichnet**, daß auch derjenige Heizkörper (2a) einer Heizkörpergruppe, der mit dem Temperaturmeßglied (6) für den zugegörigen Heizregler (1) versehen ist, über ein individuelles Steuerglied (4a) gespeist wird.

4. Elektrische Regelanordnung nach einem der vorhergehenden Ansprüche, **dadurch gekennzeichnet, daß** die Steuerglieder (4a,4) strom- oder spannungssteuernde Verstellglieder sind.

5. Elektrische Regelanordnung nach Anspruch 4, **dadurch gekennzeichnet, daß** die strom- oder spannungssteuernden verstellglieder (4a,4) als Vorwiderstände oder Spannungsteiler (Potentiometer) ausgebildet oder aus Halbleitern (Thyristoren, Triacs) aufgebaut sind.
